# FASCICULE DE BREVET EUROPEEN

(11) **EP 2 022 973 B1**
(45) Date de publication et mention de la délivrance du brevet: **12.05.2010**
(21) Numéro de dépôt: 08159832.8
(22) Date de dépôt: 07.07.2008
(51) Int. Cl.: F02K 3/06, F01D 25/24

(54) **Enveloppe externe de conduite de soufflante dans une turbomachine**
Äußeres Gehäuse eines Fan-Laufrades in einer Strömungsmaschine
Outer casing for a turbomachine fan conduit

(30) Priorité: 26.07.2007 FR 0705455
(43) Date de publication de la demande: 11.02.2009
(73) Titulaire: SNECMA, 75015 Paris (FR)
(72) Inventeur: Derenes, Jacky Raphaël Michel, 91100 Corbeil-Essonnes (FR); Dijoud, Delphine, Edith, 75014 Paris (FR); Regard, Sébastien, 94700 Maisons Alfort (FR)
(74) Mandataire: Ramey, Daniel

(56) Documents cités:
- EP-A- 0 289 376
- EP-A- 1 568 868
- GB-A- 536 461
- GB-A- 2 280 484
- US-A- 4 471 609
- US-A1- 2005 022 501

## Description

La présente invention concerne une conduite de soufflante pour une turbomachine telle qu'un turboréacteur d'avion.

Le document US-A1-20051022501 décrit des enveloppes ou des carters pour une turbomachine, et contient les caractéristiques du préambule de la revendication 1.

La conduite de soufflante (souvent appelée « fan duct » ou « by pass duct ») d'une turbomachine s'étend autour du moteur de la turbomachine, entre la soufflante et la tuyère d'échappement, et comprend deux parois coaxiales sensiblement cylindriques qui délimitent entre elles un espace annulaire d'écoulement d'une partie de l'air aspiré par la soufflante, formant un flux froid ou flux secondaire. L'autre partie de l'air aspiré par la soufflante pénètre dans le moteur de la turbomachine qui comprend d'amont en aval un compresseur, une chambre de combustion et une turbine, et forme le flux chaud ou flux primaire.

La paroi interne de la conduite est fixée à son extrémité amont sur un carter intermédiaire de la turbomachine, et est reliée à son extrémité aval à un carter d'échappement. Elle est conformée pour entourer à faible distance radiale le moteur de la turbomachine.

La paroi externe de la conduite est fixée à son extrémité amont sur le carter intermédiaire et à son extrémité aval à un système de suspension et de centrage qui est relié au carter d'échappement et qui est en général situé en amont d'un système d'inversion de poussée. Elle assure la mise en forme aérodynamique du flux secondaire, et peut également jouer un rôle structural dans la transmission d'efforts tels que les efforts de suspension du moteur ou d'inversion de poussée et la minimisation des phénomènes de distorsion de carcasse dans le turboréacteur.

Dans la technique antérieure, notamment dans le cas des turboréacteurs accrochés à la partie arrière du fuselage de l'avion, la paroi externe de la conduite est constituée d'une pièce monobloc de forme sensiblement cylindrique qui n'est pas conformée pour pouvoir s'ouvrir, ce qui pose des problèmes d'accès au moteur pour les opérations de maintenance. Or, le rôle structural important de cette pièce dans ce type de turboréacteurs interdit d'y aménager autre chose que de très petites trappes d'accès, ce qui ne permet pas d'accéder aux équipements et aux injecteurs répartis sur toute la circonférence du moteur.

L'invention a notamment pour but d'apporter une solution simple, économique et efficace à ces problèmes, permettant d'éviter les inconvénients de la technique connue, et visant en particulier à améliorer l'accès au moteur lors des opérations de maintenance et à réduire ainsi la durée des périodes d'immobilisation de l'avion, tout en assurant une bonne transmission des efforts du moteur vers l'avion et une bonne rigidité du turboréacteur.

Elle propose à cet effet un turboréacteur à double flux, comprenant une enveloppe sensiblement cylindrique montée en aval d'un carter intermédiaire et délimitant extérieurement un espace annulaire d'écoulement d'un flux secondaire autour du turboréacteur, caractérisé en ce que l'enveloppe cylindrique est formée d'une ossature en treillis et de panneaux de carénage amovibles fixés sur cette ossature, celle-ci comprenant une bride annulaire amont de fixation au carter intermédiaire, une bride annulaire aval de liaison à un carter d'échappement, et des poutres rigides reliant les deux brides entre elles.

L'invention propose ainsi de séparer les parties structurales et les parties aérodynamiques de l'enveloppe externe de la conduite de soufflante du turboréacteur, pour faciliter considérablement les opérations de maintenance.

Pour accéder à l'intérieur du turboréacteur selon l'invention, il suffit en effet d'ôter les panneaux de carénage de l'ossature en treillis de l'enveloppe externe de la conduite de soufflante. L'accès est rendu particulièrement aisé par la conformation de cette ossature en treillis, composée pour l'essentiel de deux brides, respectivement amont et aval, et de poutres rigides reliant ces deux brides. Cette conformation facilite l'accès aux équipements et aux injecteurs qui sont régulièrement répartis sur toute la circonférence du turboréacteur.

La forme des panneaux de carénage peut être choisie de manière à optimiser leurs performances aérodynamiques sans aucune répercussion sur les qualités structurales de l'ossature en treillis de l'enveloppe cylindrique.

L'utilisation de poutres rigides, qui confèrent à l'ossature sa forme de treillis, permet d'améliorer la transmission des efforts dans l'ossature en répartissant la reprise d'efforts sur des zones étendues. La rigidité de cette structure permet d'y faire transiter une partie des efforts tranchants passant dans l'ensemble propulsif et ainsi de limiter la transmission de ces derniers par le moteur lui-même, ce qui permet une réduction importante des phénomènes de distorsion de carcasse, qui pénalisent en général les performances du turboréacteur. Les points de fixation des poutres rigides sur les brides annulaires peuvent être choisis pour optimiser au mieux la transmission d'efforts. Néanmoins, il peut être avantageux de choisir une localisation légèrement différente pour certains de ces points de fixation afin de faciliter l'accès à des zones spécifiques du moteur lors des opérations de maintenance.

Plus généralement, l'architecture de l'enveloppe externe de la conduite de soufflante selon l'invention permet également une réduction de la masse et du coût de fabrication de cette enveloppe externe.

Avantageusement, l'ossature en treillis comprend des poutres parallèles à l'axe et/ou des poutres inclinées par rapport à l'axe, qui relient la bride annulaire amont à la bride annulaire aval, et qui sont régulièrement réparties autour de l'axe.

Selon une première variante de l'invention, l'ossature en treillis comprend des poutres rigides inclinées par rapport à l'axe qui partagent l'enveloppe en zones de forme sensiblement triangulaire et de dimensions sensiblement égales, chacune de ces poutres ayant une extrémité amont solidaire de la bride annulaire amont et une extrémité aval solidaire de la bride annulaire aval.

Cette forme de treillis particulièrement simple en zigzag se caractérise par une très bonne transmission des efforts.

Selon une autre variante de l'invention, l'ossature en treillis comprend un anneau de renfort intermédiaire disposé coaxialement entre les brides annulaires amont et aval et relié aux poutres amont et aval par des poutres rigides droites et/ou inclinées par rapport à l'axe.

Cette deuxième forme de treillis peut être avantageuse pour des conduites de soufflantes relativement longues, ou de manière générale, pour améliorer encore la rigidité de la structure, du fait que la présence de l'anneau de renfort intermédiaire autorise l'utilisation de poutres plus courtes.

Préférentiellement, chaque poutre rigide inclinée forme un même angle α avec chacune des deux poutres voisines.

Selon une autre caractéristique de l'invention, les panneaux de carénage comportent un revêtement de protection acoustique.

L'absence de trappes aménagées dans ces panneaux et leur surface importante autorisent un meilleur traitement acoustique de la conduite de soufflante et donc une meilleure réduction des nuisances acoustiques générées par le turboréacteur.

L'ossature en treillis peut être réalisée en métal et être monobloc, ou être formée d'éléments mécano-soudés ou boulonnés.

Alternativement, l'ossature en treillis peut être formée d'éléments en matériau composite vissés, rivetés ou collés.

Selon une autre caractéristique de l'invention, des modules d'équipement sont fixés sur les brides annulaires de l'ossature en treillis de l'enveloppe cylindrique.

L'invention sera mieux comprise et d'autres détails, avantages et caractéristiques de l'invention apparaîtront plus clairement à la lecture de la description suivante faite à titre d'exemple non limitatif, en référence aux dessins annexés dans lesquels :
- la figure 1 est une vue schématique en perspective d'une première variante de turboréacteur selon l'invention ;
- la figure 2 est une vue schématique en perspective d'une deuxième variante de turboréacteur selon l'invention.

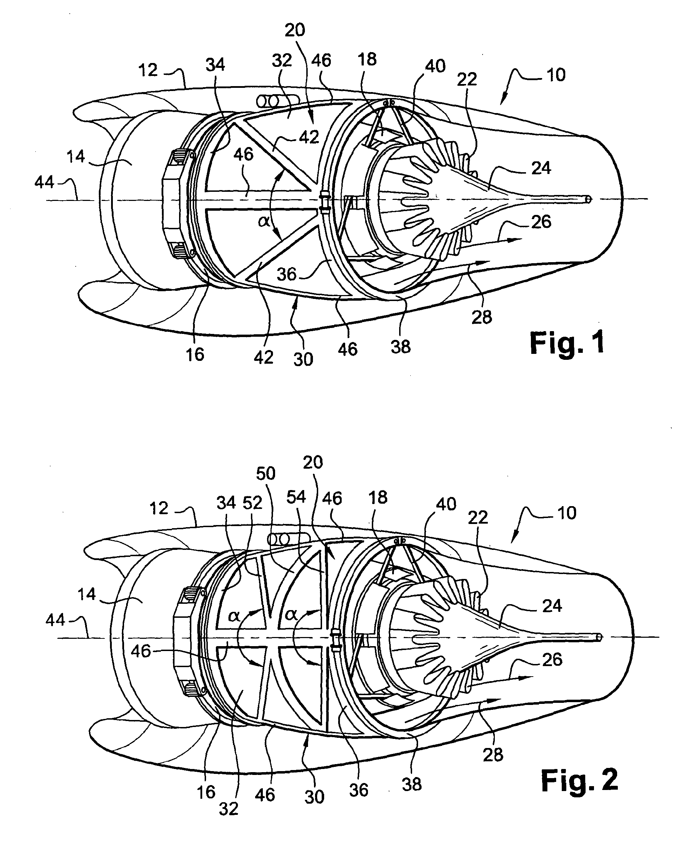

La figure 1 représente un turboréacteur à double flux 10 entouré par une nacelle 12 (représentée en coupe), et comprenant essentiellement, d'amont en aval, un carter de soufflante 14, un carter intermédiaire 16, une conduite de soufflante formée de deux enveloppes coaxiales sensiblement cylindriques, respectivement interne 18 et externe 20, et un mélangeur 22 entourant la partie amont d'un cône d'éjection 24 monté en aval d'un carter d'échappement. L'enveloppe interne 18 de la conduite de soufflante est généralement appelée I.F.D. (Inner Fan Duct) tandis que l'enveloppe externe 20 est généralement appelée O.F.D. (Outer Fan Duct).

Le carter de soufflante 14 entoure une roue de soufflante entraînée en rotation par la turbine du turboréacteur, d'une façon bien connue de l'homme du métier. Pendant le fonctionnement du moteur, la soufflante génère un flux d'air secondaire, qui s'écoule vers l'arrière autour du turboréacteur entre les enveloppes cylindriques interne 18 et externe 20, et qui fournit une partie de la poussée du moteur. Une partie de l'air entrant dans le moteur alimente le compresseur d'entrée du turboréacteur, puis est mélangé à du carburant dans la chambre de combustion. Les gaz de combustion 26 sortant de la chambre de combustion passent dans la turbine puis sont éjectés dans un carter d'échappement et sortent du turboréacteur par le mélangeur 22 en s'écoulant le long du cône d'éjection 24, de manière à se mélanger avec le flux secondaire 28 issu de la conduite de soufflante.

Selon l'invention, l'enveloppe externe 20 de la conduite de soufflante est formée d'une ossature 30 sur laquelle sont fixés des panneaux de carénage 32 amovibles destinés à guider le flux secondaire. Cette ossature 30 comprend une bride annulaire amont 34 par laquelle elle est fixée à une bride annulaire du carter intermédiaire 16, par exemple par boulonnage. L'ossature 30 comprend également une bride annulaire aval 36 de fixation à un anneau de suspension 38 qui est porté par des biellettes 40, par exemple au nombre de trois, reliées au carter d'échappement de manière bien connue.

Les deux brides 34, 36 de l'ossature 30 de l'enveloppe externe 20 sont, selon l'invention, reliées par des poutres 42 qui sont rigides et inclinées par rapport à l'axe 44 du turboréacteur. Ces brides sont de préférence reliées également par des poutres 46 longitudinales, c'est-à-dire parallèles à l'axe du turboréacteur. Comme le montre la figure 1, l'ossature 30 de l'enveloppe externe peut par exemple comporter quatre poutres longitudinales 46 régulièrement réparties autour de l'axe 44 du turboréacteur et définissant quatre portions de cylindre de forme générale rectangulaire. Chaque portion de cylindre est divisée, sensiblement selon l'une de ses diagonales, par l'une des poutres 42 inclinées définissant ainsi deux zones de forme générale triangulaire. Dans la configuration représentée sur la figure 1, dans laquelle l'ossature 30 présente une rigidité et une capacité de reprise d'efforts optimales, les poutres inclinées 42 sont agencées en zigzag, c'est-à-dire que chaque poutre 42 est fixée à la bride amont 34 en une zone proche de la zone de fixation sur cette bride de l'une des deux poutres 42 voisines, et est fixée à la bride aval 36 en une zone proche de la zone de fixation sur cette bride de l'autre des poutres 42 voisines, si bien que l'ensemble des poutres inclinées 42 confère à l'ossature 30 une forme en treillis.

Les panneaux de carénage 32 ont chacun une forme correspondant sensiblement à une zone triangulaire de l'ossature 30 en treillis, de manière à pouvoir être fixés sur les poutres inclinées 42 et longitudinales 46 ainsi que sur les brides annulaires amont 34 et aval 36, cette fixation pouvant être réalisée de manière conventionnelle, par exemple par boulonnage. Ces panneaux comportent sur leur surface interne un revêtement acoustique semblable à celui utilisé traditionnellement en certaines zones de la face interne de la nacelle 12, par exemple au niveau de la manche d'entrée d'air.

En vol, la structure en treillis de l'ossature 30 de l'enveloppe externe 20 permet d'améliorer la répartition des efforts repris par l'ossature, tels que les efforts de suspension du moteur, en particulier grâce à la disposition des poutres rigides inclinées 42. Du fait de sa meilleure rigidité, l'ossature offre également une meilleure tenue aux charges de contre-poussée lors du déploiement d'un système d'inversion de poussée monté en aval de la conduite de soufflante, et permet, de manière plus générale, de limiter les efforts tranchants passant par le moteur et donc de réduire les phénomènes de distorsion de carcasse.

Les panneaux de carénage 32 selon l'invention offrent en outre une plus grande surface pour le traitement acoustique que les enveloppes externes de conduites de soufflantes conventionnelles, qui sont munies de trappes d'accès au moteur.

A l'arrêt, les panneaux de carénage 32 peuvent être facilement retirés de manière à permettre un accès aisé au moteur au travers de l'ossature en treillis 30. L'invention permet en particulier d'accéder aux équipements et aux injecteurs disposés tout autour du moteur.

La disposition des poutres inclinées 42 décrite ci-dessus et présentée sur la figure 1 offre une rigidité maximale, mais il peut être avantageux de choisir une disposition légèrement différente afin de libérer l'accès à des zones spécifiques du moteur en évitant qu'elles ne soient masquées par l'une de ces poutres 42.

Sur la figure 2, l'enveloppe externe 20 de la conduite de soufflante du turboréacteur 10 comprend en outre un anneau de renfort intermédiaire 50 intégré à l'ossature 30 de cette enveloppe externe. Cet anneau de renfort 50 est disposé coaxialement avec les brides amont 34 et aval 36, environ à mi-distance entre les deux brides, et divise en deux zones de forme générale rectangulaire, chacune des quatre portions de cylindre définies par les poutres de renfort longitudinales 46, si bien que l'ossature 30 comporte quatre portions de cylindre en amont de l'anneau de renfort 50 et quatre portions de cylindre en aval de cet anneau de renfort.

L'ossature 30 comprend deux ensembles de poutres rigides inclinées 52, 54 disposées de manière analogue aux poutres inclinées de la première variante de l'invention, représentée sur la figure 1. Plus précisément, l'ossature comprend en amont quatre premières poutres inclinées 52 agencées en zigzag et reliant la bride annulaire amont 34 à l'anneau de renfort intermédiaire 50, en s'étendant chacune selon la diagonale de l'une des quatre portions de cylindre situées en amont de l'anneau de renfort 50. En aval, l'ossature 30 comprend quatre secondes poutres inclinées 54 également agencées en zigzag et reliant l'anneau de renfort intermédiaire 50 à la bride annulaire aval 36, en s'étendant chacune selon la diagonale de l'une des quatre portions de cylindre situées en aval de l'anneau de renfort 50.

Dans cette deuxième variante de l'invention, compte tenu de la présence de l'anneau de renfort intermédiaire 50, les poutres inclinées 52 et 54 sont plus courtes que celles de la première variante, et les zones triangulaires sont moins étendues, ce qui confère à cette structure une rigidité encore accrue. Cette variante se révèle ainsi particulièrement bien adaptée aux turboréacteurs relativement longs ou susceptibles de générer des efforts trop importants pour la structure en treillis simple de la première variante.

De manière générale, l'invention permet un gain de poids ainsi qu'une réduction du coût de fabrication de l'enveloppe externe de la conduite de soufflante, par la division de cette enveloppe en une ossature rigide d'une part, remplissant les fonctions structurales de l'enveloppe, et en panneaux de carénage d'autre part, qui remplissent les fonctions aérodynamiques et acoustiques de l'enveloppe.

## Revendications

1. Turboréacteur à double flux (10), comprenant une enveloppe sensiblement cylindrique (20) montée en aval d'un carter intermédiaire (16) et délimitant extérieurement un espace annulaire d'écoulement d'un flux secondaire (28) autour du turboréacteur, **caractérisé en ce que** l'enveloppe cylindrique (20) est formée d'une ossature en treillis (30) et de panneaux de carénage amovibles (32) fixés sur l'ossature, celle-ci comprenant au moins une bride annulaire amont (34) de fixation au carter intermédiaire (16), une bride annulaire aval (36) de liaison à un carter d'échappement, et des poutres rigides (42, 46, 52, 54) reliant les deux brides (34, 36) entre elles.

2. Turboréacteur selon la revendication 1, **caractérisé en ce que** l'ossature en treillis (30) comprend des poutres (46) parallèles à l'axe (44) et régulièrement réparties autour de l'axe.

3. Turboréacteur selon la revendication 1 ou 2, **caractérisé en ce que** l'ossature en treillis (30) comprend des poutres rigides (42) inclinées par rapport à l'axe (44), chacune de ces poutres (42) ayant une extrémité amont solidaire de la bride annulaire amont (34) et une extrémité aval solidaire de la bride annulaire aval (36).

4. Turboréacteur selon l'une des revendications 1 à 3, **caractérisé en ce que** l'ossature en treillis (30) comprend un anneau de renfort intermédiaire (50) disposé coaxialement entre les brides annulaires amont (34) et aval (36) et relié par des poutres (46, 52, 54) aux brides annulaires amont et aval.

5. Turboréacteur selon la revendication 3 ou 4, **caractérisé en ce que** les poutres inclinées (42, 52, 54) sont agencées en zigzag entre les brides annulaires.

6. Turboréacteur selon l'une des revendications 3 à 5, **caractérisé en ce que** chaque poutre inclinée (42, 52, 54) forme un même angle α avec chacune des deux poutres voisines.

7. Turboréacteur selon l'une des revendications 1 à 6, **caractérisé en ce que** les panneaux de carénage (32) comportent un revêtement de protection acoustique.

8. Turboréacteur selon l'une des revendications 1 à 7, **caractérisé en ce que** l'ossature en treillis (30) est réalisée en métal et est monobloc, ou formée d'éléments mécano-soudés ou boulonnés.

9. Turboréacteur selon l'une des revendications 1 à 7, **caractérisé en ce que** l'ossature en treillis (30) est formée d'éléments en matériau composite qui sont vissés, rivetés ou collés.

10. Turboréacteur selon l'une des revendications 1 à 9, **caractérisé en ce que** des modules d'équipement sont fixés sur les brides annulaires (34, 36) de l'ossature en treillis (30).

## Claims

1. A twin-flow turbo-jet engine (10), comprising a substantially cylindrical casing (20) mounted downstream of an intermediate housing (16) and externally defining an annular flow space for a secondary flow (28) around the turbo-jet engine, wherein the cylindrical casing (20) is formed from a lattice framework (30) and from removable cowling panels (32) fixed to the framework, said framework comprising at least an upstream annular flange (34) for fixing to the intermediate housing (16), a downstream annular flange (36) for connecting to an exhaust housing and rigid beams (42, 46, 52, 54) connecting the two flanges (34, 36) to one another.

2. The turbo-jet engine as claimed in claim 1, wherein the lattice framework (30) comprises beams parallel (46) to the axis (44) and regularly distributed about the axis.

3. The turbo-jet engine as claimed in claim 1 or 2, wherein the lattice framework (30) comprises rigid beams (42) inclined relative to the axis (44), each of these beams (42) having an upstream end fixed to the upstream annular flange (34) and a downstream end fixed to the downstream annular flange (36).

4. The turbo-jet engine as claimed in one of claims 1 to 3, wherein the lattice framework (30) comprises an intermediate reinforcing ring (50) arranged coaxially between the upstream (34) and downstream (36) annular flanges and connected by beams (46, 52, 54) to the upstream and downstream annular flanges.

5. The turbo-jet engine as claimed in claim 3 or 4, wherein the inclined beams (46, 52, 54) are arranged in a zigzag pattern between the annular flanges.

6. The turbo-jet engine as claimed in one of claims 3 to 5, wherein each inclined beam (46, 52, 54) forms the same angle α with each of the two adjacent beams.

7. The turbo-jet engine as claimed in one of claims 1 to 6, wherein the cowling panels (32) comprise a coating providing acoustic protection.

8. The turbo-jet engine as claimed in one of claims 1 to 7, wherein the lattice framework (30) is produced from metal and is in one piece or formed from elements which are mechanically welded or bolted together.

9. The turbo-jet engine as claimed in one of claims 1 to 7, wherein the lattice framework (30) is formed from elements made of composite material which are screwed together, riveted or bonded.

10. The turbo-jet engine as claimed in one of claims 1 to 9, wherein modules for equipment are fixed to the annular flanges (34, 36) of the lattice framework (30).

## Patentansprüche

1. Zweistromstrahltriebwerk (10) mit einer im Wesentlichen zylindrischen Hülle (20), die stromabwärts von einem Zwischengehäuse (16) angebracht ist und außen einen ringförmigen Raum für die Strömung eines Sekundärstroms (28) um das Strahltriebwerk abgrenzt, **dadurch gekennzeichnet, dass** die zylindrische Hülle (20) aus einem Flechtwerkgerippe (30) und abnehmbaren Verkleidungsplatten (32) gebildet ist, wobei dieses wenigstens einen stromaufwärts gelegenen ringförmigen Flansch (34) zur Befestigung an dem Zwischengehäuse (16), einen stromabwärts gelegenen ringförmigen Flansch (34) zur Verbindung mit einem Auslassgehäuse sowie starre Träger (42, 46, 52, 54) aufweist, welche die zwei Flansche (34, 36) untereinander verbinden.

2. Strahltriebwerk nach Anspruch 1, **dadurch gekennzeichnet, dass** das Flechtwerkgerippe (30) Träger (46) aufweist, die parallel zu der Achse (44) und regelmäßig um die Achse verteilt sind.

3. Strahltriebwerk nach Anspruch 1 oder 2, **dadurch gekennzeichnet, dass** das Flechtwerkgerippe (30) starre Träger (42) aufweist, die bezüglich der Achse (44) geneigt sind, wobei jeder dieser Träger (42) ein stromaufwärts gelegenes Ende, das mit dem stromaufwärts gelegenen ringförmigen Flansch (34) fest verbunden ist, und ein stromabwärts gelegenes Ende hat, das mit dem stromabwärts gelegenen ringförmigen Flansch (36) fest verbunden ist.

4. Strahltriebwerk nach einem der Ansprüche 1 bis 3, **dadurch gekennzeichnet, dass** das Flechtwerkgerippe (30) einen Zwischenverstärkungsring (50) aufweist, der koaxial zwischen dem stromaufwärts gelegenen (34) und dem stromabwärts gelegenen ringförmigen Flansch (36) angeordnet und durch Träger (46, 52, 54) mit dem stromaufwärts gelegenen und dem stromabwärts gelegenen ringförmigen Flansch verbunden ist.

5. Strahltriebwerk nach Anspruch 3 oder 4, **dadurch gekennzeichnet, dass** die geneigten Träger (42, 52, 54) im Zickzack zwischen den ringförmigen Flanschen angeordnet sind.

6. Strahltriebwerk nach einem der Ansprüche 3 bis 5, **dadurch gekennzeichnet, dass** jeder geneigte Träger (42, 52, 54) einen gleichen Winkel α mit jedem der zwei benachbarten Träger bildet.

7. Strahltriebwerk nach einem der Ansprüche 1 bis 6, **dadurch gekennzeichnet, dass** die Verkleidungsplatten (32) eine akustische Schutzbeschichtung aufweisen.

8. Strahltriebwerk nach einem der Ansprüche 1 bis 7, **dadurch gekennzeichnet, dass** das Flechtwerkgerippe (30) aus Metall gefertigt und einstückig ist oder aus maschinengeschweißten oder verbolzten Elementen gebildet ist.

9. Strahltriebwerk nach einem der Ansprüche 1 bis 7, **dadurch gekennzeichnet, dass** das Flechtwerkgerippe (30) aus Elementen aus Verbundmaterial gebildet ist, die verschraubt, genietet oder verklebt sind.

10. Strahltriebwerk nach einem der Ansprüche 1 bis 9, **dadurch gekennzeichnet, dass** Ausrüstungsmodule an den ringförmigen Flanschen (34, 36) des Flechtwerkgerippes (30) befestigt sind.
